# EUROPEAN PATENT SPECIFICATION

(11) **EP 3 425 327 B1**
(45) Date of publication and mention of the grant of the patent: **06.09.2023**
(21) Application number: 17179940.6
(22) Date of filing: 06.07.2017
(51) Int. Cl.: G01B 11/275

(54) **DETERMINING WHEEL ALIGNMENT PARAMETERS**
BESTIMMUNG VON RADAUSRICHTUNGSPARAMETERN
DÉTERMINATION DE PARAMÈTRES D'ALIGNEMENT DE ROUE

(43) Date of publication of application: 09.01.2019
(73) Proprietor: Car-O-Liner Group AB, 421 32 Västra Frölunda (SE)
(72) Inventor: MODÉN, Anders, 571 92 NÄSSJÖ (SE)
(74) Representative: Kransell & Wennborg KB

(56) References cited:
- WO-A2-2008/120217
- US-A1- 2008 273 194
- US-A1- 2010 302 558
- US-A1- 2013 271 574
- MORANO R A ET AL: "SHORT PAPERS STRUCTURED LIGHT USING PSEUDORANDOM CODES", IEEE TRANSACTIONS ON PATTERN ANALYSIS AND MACHINE INTELLIGENCE, IEEE COMPUTER SOCIETY, USA, vol. 20, no. 3, 1 March 1998 (1998-03-01), pages 322-327, XP000767921, ISSN: 0162-8828, DOI: 10.1109/34.667888
- JASON GENG: "Structured-light 3D surface imaging: a tutorial", ADVANCES IN OPTICS AND PHOTONICS, vol. 3, no. 2, 31 March 2011 (2011-03-31), page 128, XP055556182, DOI: 10.1364/AOP.3.000128

## Description

### TECHNICAL FIELD

The present invention relates to a method for determining wheel alignment parameters of a vehicle wheel arrangement. The invention also relates to a corresponding wheel alignment system for determining wheel alignment parameters of the vehicle wheel arrangement

### BACKGROUND

During vehicle manufacture and assembly, as well as maintenance, there is always a desire to make sure that the wheels are angled relative to each other and to the ground according to drawings and specification. If the wheels of the vehicle are angled differently and do not fulfil the given specification, the wheels may have to be adjusted. This adjustment is commonly referred to as wheel alignment. The purpose of the wheel alignment adjustment of the wheels is to reduce tire wear and to ensure that the vehicle travels straight when desired, as well as to optimize the way the vehicle behaves and responds when driving. The adjustments are commonly referred to as camber, caster, toe and king pin inclination.

There are different approaches for determining if the wheels of the vehicle are in need of adjustment or not. Hence, different methods are available for determining if the wheel has been angled such that wheel alignment is necessary. One approach is to clamp a camera to each of the wheels of the vehicle. As the steerable axle is turned, the camera detects the angles for determining if the respective wheel is in need of wheel alignment or not. Wheel alignment performed in this manner requires that an operator manually fixates the cameras onto the wheel surface, as well as calibrates the camera for correctly detecting the wheel alignment angles. Another approach is to put targets on the wheel and use a camera to look at the targets for determining if the wheel is in need of wheel alignment or not.

US 7,454,841 presents a touchless system for determining wheel alignment parameters of vehicle wheels. In the touchless system, there is no need to attach anything to the wheel or the rim in order to determine if the wheel is in need of wheel alignment or not. In US 7,454,841, a projector projects a pattern onto the surface of the wheel. Two cameras are preferably used for acquiring images of the projected pattern. The images are provided for determining the relative position and orientation of the wheel in three dimensional space. Thereafter, wheel alignment angles can be subsequently determined.

Although the arrangement in US 7,454,841 reduces the need for an operator to manually fixate a camera to each of the wheels of the vehicle, the method described in US 7,454,841 is still in need of further improvements in terms of e.g. functionality and time process for performing the measurement and determining the wheel alignment parameters.

According to further prior art documents, US 2008/273194 describes in its abstract a sensor and method of determining the orientation of an object, such as the alignment characteristics of a tire and wheel assembly mounted on a vehicle. Further, US 2013/271574 relates to a vehicle service system having at least one pattern-projecting, machine-vision sensor for acquiring images of objects and surface during a vehicle service or inspection procedure. Still further, US2010/302558 relates to a sensor system for analyzing a feature in a sensing volume. The sensor system includes a laser source and a sensor.

### SUMMARY

It is therefore an object of the present invention to provide a determining wheel alignment parameters of a vehicle wheel arrangement which at least partially overcomes the deficiencies of the prior art. This is achieved by a method according to claim 1.

The wording "vehicle wheel arrangement" should in the context of the present disclosure be understood to include both the wheel as well as the rim onto which the wheel is mounted. Hence, the surface of the wheel arrangement may preferably be understood to mean the surface of the wheel and rim facing away from the vehicle at which the wheel arrangement is connected.

Furthermore, the plurality of components of the light pattern should be understood to mean light components. These light components may preferably be arranged as individual light dots or light points. These light points/dots may preferably be arranged in the form of light filled circles, triangles, rectangles, etc.

The light pattern thus comprises a plurality of light components. The plurality of light components is arranged in a so-called pseudo-random pattern to form the light pattern. Each component has a unique relationship to its surrounding components. Accordingly, the "identity" of a component relates to the unique relationship to the surrounding components. The mutual relationship is thus relating to how the components are positioned relative to each other. The identity of a component may also be referred to as the footprint or fingerprint of the component. The number of surrounding components necessary for determining the identity of the first component is dependent on the total number of components projected on the surface of the vehicle wheel arrangement. According to a non-limiting example, at least three surrounding components may be necessary for determining the identity of the first component.

Still further, it should be understood that the optical element is arranged in a manner as to provide the light pattern onto the surface of the vehicle wheel arrangement when light is projected onto the optical element. This is realized by providing the plurality of portions in the distribution pattern on the optical element. Example embodiments of these portions are described further below.

An advantage of the present invention is that a touchless method for determining wheel alignment parameters is provided. There is thus no need of physically attaching a camera or other component to the wheel for determining wheel alignment parameters thereof. The inventors have realized that by determining a distance to the first component on the vehicle wheel arrangement, a time efficient method can be provided for determining the wheel alignment parameters. The wheel alignment parameters may subsequently be used for determining if, and to which extent, wheel alignment of the wheel is necessary. Thus, the parameters may be used in conjunction with a wheel alignment system for performing wheel alignment, by e.g. using the parameters relative to a reference object, etc. A map representing the distance from the light emitting arrangement to the wheel arrangement can hereby be provided for the entire surface, or portions of the surface of the wheel surface for determining angles of the wheel. According to a further advantage, the distance from the light emitting arrangement to the surface of the wheel can be determined by means of a non-iterative process. Hence, no assumptions of distances or positions need to be made for determining the distance of the light beam. The method may be performed on each wheel separately, or simultaneously.

Furthermore, by means of the above described method, all parameters can be calculated using one projected light pattern and one acquired image of the light pattern. Since the parameters are calculated from the single image, the analysis and method can be executed even when the vehicle wheel arrangement is moving. Other prior art methods rely on more than one single acquired image to achieve a desired accuracy, whereby these methods will inevitably analyze at slightly different positions of the wheel as its position will have changed, if ever so slightly, between the images. The accuracy by means of the above described method on the other hand will only be dependent on the exposure time of each image.

According to the invention, the step of determining the identity of the first component further comprise the steps of determining an angular displacement between the first component and each of the plurality of separately arranged components; and determining the identity of the first component based on a mutual angular displacement between the first component and each of the plurality of separately arranged components.

Accordingly, when determining the identity of the component, the relationship to the surrounding components is determined by measuring the angles between the first component and the remaining components. The angle can, for example, be measured from a horizontal or a vertical geometric axis extending through the first component. Hereby, the image of the light pattern on the surface of the vehicle wheel may be scaled in relation to the distribution pattern of the optical element, while still maintaining the mutual angular displacement between the components.

According to an example embodiment, the step of determining the first portion of the distribution pattern in the optical element may comprise the steps of determining a mutual relationship between each of the plurality of portions of the distribution patterns of the optical element; comparing the mutual relationship between each of the plurality of portions of the distribution patterns and the identity of the first component on the surface of the vehicle wheel arrangement; and determining that the first portion is the portion having a mutual relationship which corresponds to the identity of the first component.

The mutual relationship between each of the plurality of portions of the distribution patterns of the optical element may be determined in advance and stored in a computer and/or a control unit. Thus, the pseudo-random pattern of the distribution pattern may have been determined in advance, whereby the acquired image is compared to data determined at a previous point in time. This will reduce the time frame for determining from which portion the first component originates, as well as eliminate the need of using more than one light detecting unit.

According to an example embodiment, the image of the light pattern on the surface of the vehicle wheel arrangement may be acquired by means of a light detecting unit, wherein the step of determining the distance between the first portion and the first component further comprises the step of determining a mutual relationship between the light detecting unit and the light emitting arrangement.

According to an example embodiment, the step of determining the distance between the first portion and the first component may further comprise the steps of determining a position of the first portion relative to a local coordinate system of the light emitting arrangement; and determining a position of the first component in the acquired image relative to a local coordinate system of the light detecting unit.

Hereby, the distance between the first portion of the optical element and the first component of the acquired image in the light detecting unit can be determined. By means of this distance, the distance between the first portion of the optical element and the first component on the surface of the vehicle wheel arrangement can be determined. Using a reference target, the position and angle in space between the light emitting arrangement and the light detecting unit can be calibrated. Since the position of the first portion of the projected pattern is know it is possible to use triangulation of the distance and position to each component in the acquired image using only one light detecting unit. Without this feature of the light pattern it would be necessary to use at least two cameras.

According to an example embodiment, the step of determining the mutual relationship between the light detecting unit and the light emitting arrangement may comprise the step of determining a distance and relative rotation between the light detecting unit and the light emitting arrangement.

According to an example embodiment, the method may further comprise the step of determining a direction of the light beam generating the first component on the vehicle wheel arrangement.

Hence, the distance to each component is calculated using triangulation. The known, previously calibrated distance from the light emitting arrangement to the light detecting unit forms the base of the triangle. The light detecting device gives the angle to the detected component, whereby the angle of the light pattern component leaves the optical element in a known and previously calibrated manner.

According to an example embodiment, the projected light pattern may represent a subset of separately arranged components from a full set of plurality of separately arranged components.

By performing the method for a subset of components instead of all components on the vehicle wheel arrangement, the computational effort for determining the distance between the first portion of the distribution pattern in the optical element and the first component on the surface of the vehicle wheel arrangement is reduced. Hence, a less number of components may be used for determining the identity of the first component.

According to a second aspect, there is provided a wheel alignment system for determining wheel alignment parameters of a vehicle wheel arrangement according to claim 8.

The control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

By means of the second aspect, a system is provided that does not require the involvement of fixating any structural components to the wheel for determining the wheel alignment parameters. Hence, the vehicle merely needs to be positioned such that the light emitting arrangement can project the light pattern onto the surface of the vehicle wheel arrangement.

Further effects and features of the second aspect are largely analogous to those described above in relation to the first aspect.

According to an example embodiment, the light emitting arrangement may be arranged to project light patterns onto the surface of vehicle wheel arrangement from two positions spaced apart from each other.

Hereby, instead of determining a mutual relationship between the light emitting arrangement and the light detecting unit, the mutual relationship between the two spaced apart positions may be determined. Hereby, the light detecting unit can be positioned relative to the light emitting arrangement at substantially any non-calibrated position, as long as it is able to capture an image of the light pattern on the surface of the vehicle wheel arrangement stemming from the two spaced apart positions.

According to an example embodiment, the optical element may be a first optical element, wherein the light emitting arrangement may further comprise a second optical element, wherein the first and second optical elements are spaced apart from each other.

According to an example embodiment, the light source may be a first light source, wherein the light emitting arrangement may further comprise a second light source, wherein the first and second light sources are spaced apart from each other.

According to an example embodiment, the first optical element may be connected to the first light source for projecting a first light pattern onto the surface of the vehicle wheel arrangement, and wherein the second optical element is connected to the second light source for projecting a second light pattern onto the surface of the vehicle wheel arrangement.

Hereby, at least two light emitting arrangements are used. These light emitting arrangements each, via the respective first and second optical elements, projects a light pattern onto the surface of the vehicle wheel surface. When determining the identity of the first component, a mutual relationship between components stemming from the first light source is determined and a mutual relationship between components stemming from the second light source is determined. In order to determine if the light pattern originates from the first light source or from the second light source, the first and second light sources may be arranged to emit light having different wavelengths or the light may be sequentially emitted from the first and second light sources.

According to an example embodiment, the light detecting unit may be configured to acquire an image of the light pattern on the vehicle wheel arrangement resulting from light projected from the two spaced apart positions.

According to an example embodiment, the light emitting arrangement may further comprise a light reflecting arrangement, said light reflecting arrangement being arranged to project the patterns onto the surface of vehicle wheel arrangement from the two spaced apart position.

Hereby, instead of using two separately arranged light sources, a light reflecting arrangement can be used for directing light pattern from the optical element to the at least two spaced apart positions. The light reflecting arrangement may comprise a plurality of mirrors which are arranged to at least partly reflect the light pattern projected thereon.

According to an example embodiment, the optical element may be a diffractive optical element, wherein the plurality of portions forming the distribution pattern is formed by a structure on the surface of the diffractive optical element.

A diffractive optical element is suitably used in connection to a light source in the form of a laser. Accordingly, the light source may be a laser arranged to emit a laser beam. By using a laser, a single laser beam is emitted towards the diffractive optical element, whereby the distribution pattern is formed by the structure on the surface of the diffractive optical element. The structure of the diffractive optical element may also be referred to as a microstructure. The surface structure of the diffractive optical element may preferably be etched to a glass material, or the like. Other alternatives are of course conceivable such as e.g. a structure being embossed in polymer material or the like.

Furthermore, using a light source in the form of a laser provides for a cost effective arrangement, since the light source does not have to be complex in function. Its purpose is merely to emit a laser beam towards the diffractive optical element.

According to an example embodiment, the optical element may be an optical grating element comprising a plurality of apertures forming the distribution pattern.

Hereby, an alternative to the diffractive optical element is provided. The optical grating element thus comprises apertures in the form of through holes for providing the light pattern on the surface of the vehicle wheel arrangement.

Further effects and features of the second aspect are largely analogous to those described above in relation to the first aspect.

Further features of, and advantages with, the present invention will become apparent when studying the appended claims and the following description. The skilled person realize that different features of the present invention may be combined to create embodiments other than those described in the following, without departing from the scope of the present invention as defined by the appended claims.

### BRIEF DESCRIPTION OF THE DRAWINGS

The above, as well as additional objects, features and advantages of the present invention, will be better understood through the following illustrative and non-limiting detailed description of exemplary embodiments of the present invention, wherein:
Fig. 1 is a perspective view of a vehicle and a wheel alignment system according to an example embodiment;
Fig. 2 is a perspective view of a wheel alignment system according to another example embodiment;
Fig. 3 is a perspective view of a wheel alignment system according to yet another example embodiment; and
Fig. 4 is an example embodiment of a flow chart for determining wheel alignment parameters.

### DETAILED DESCRIPTION

The present invention will now be described more fully hereinafter with reference to the accompanying drawings, in which exemplary embodiments of the invention are shown. The invention may, however, be embodied in many different forms and should not be construed as limited to the embodiments set forth herein; rather, these embodiments are provided for thoroughness and completeness. Like reference character refer to like elements throughout the description.

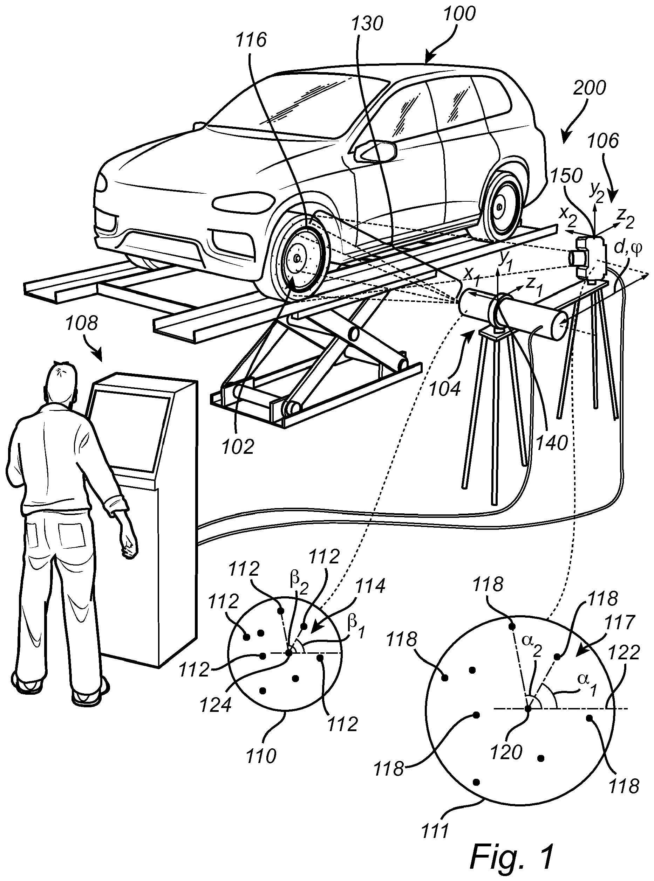

With particular reference to Fig. 1, there is depicted a vehicle 100 arranged at a service station for maintenance thereof. In particular, the vehicle 100 is exposed to a wheel alignment event in order to determine if the wheels 102, in the following also referred to as the vehicle wheel arrangements 102, are in need of adjustment, so-called wheel alignment adjustment. In order to determine if the wheels are misaligned and in need of adjustment, a wheel alignment system 200 is provided.

As can be seen in Fig. 1, the wheel alignment system 200 comprises a light emitting arrangement 104, a light detecting unit 106 and a control unit 108 connected to each of the light emitting arrangement 104 and the light detecting unit 106. Furthermore, the light emitting arrangement 104 comprises a light source (positioned inside the housing of the light emitting arrangement and thus not shown) and an optical element 110. Hereby, the light source, which may preferably be arranged as a laser light source, emits a light beam towards the optical element 110. The optical element 110 in turn comprises a plurality of portions 112 arranged to form a distribution pattern 114. Hereby, when the light source emits a light beam onto the optical element 110, a light pattern 117 in the form of the distribution pattern 114 of the optical element 110 is formed and projected onto the surface 116 of the vehicle wheel arrangement 102.

The light pattern 117 projected onto the surface 116 of the vehicle wheel arrangement 102 comprises a plurality of separately arranged components 118. These components 118 are illustrated as light dots projected on the surface 116 of the vehicle wheel arrangement 102, wherein each light dot results from a light beam generated by the distribution pattern 114 of the optical element 110.

An image 111 of the projected light pattern 117 is acquired by the light detecting unit 106. Preferably, the light detecting unit 106 is a camera arranged to capture an image of the projected light pattern 117 on the surface 116 of the vehicle wheel arrangement 102. The camera may preferably be arranged to have a field of view corresponding to the field of view of the light emitting arrangement. The resolution of the camera should be sufficient to identify the components from each other. Preferably, the resolution of the camera is higher than the resolution of the components projected on the surface of the vehicle wheel arrangement, preferably by a factor of e.g. at least two. Hereby, a camera image 111 of the projected light pattern is thus provided. From the captured image, one of the components 120, in the following referred to as the first component 120, is detected. By means of the relationship between the first component 120 and its surrounding components 118 in the camera image, an identity of the first component can be determined. This is by determining the angular displacement between the first component 120 and each of, or a selected number of surrounding components 118. The angular displacement is in Fig. 1 depicted as an angle from a horizontal geometric axis 122 extending through the first component 120. The angular displacement between the first component 120 and the surrounding components 118 is denoted as α₁ and α₂.

The determined identity of the first component 120 is now compared to the distribution pattern 114 of the optical element 110. Hereby, one of the portions 112, in the following referred to as the first portion 124, can be determined to correspond to the first component 120. In detail, based on the identity of the first component 120, it can be determined that the first component 120 results from a light beam generated by the first portion 124 of the optical element 110. In order to determine that the first portion 124 corresponds to the first component 120, it is determined that the first portion 124 has a similar mutual relationship to its surrounding portions 112 as the first component 120 has to its surrounding components 118. An angular displacement between the first portion 124 and the surrounding portions 112 of the distribution pattern 117, in Fig. 1 denoted as β₁ an β₂, should hereby correspond to the angular displacements α₁ and α₂ between the first component 120 and its surrounding components 118.

A distance 130 between the first portion 124 of the optical element 110 and the first component 120 on the surface 116 of the vehicle wheel arrangement 102 can now be determined. By performing the above described method for a plurality of components on the surface 116 of the vehicle wheel arrangement 102, a distance map can be generated which in turn can be used for determining if the wheel is angled and in need of wheel alignment adjustment. In order to determine some wheel alignment parameters, it may be necessary to rotate the vehicle wheel arrangement 102 a predetermined angle and perform the analysis again.

In order to determine the distance between the first portion 124 of the optical element 110 and the first component 120 on the surface 116 of the vehicle wheel arrangement 102, the mutual relationship between the light emitting arrangement 104 and the light detecting unit 106 is preferably determined. This mutual relationship can preferably be based on a distance d and angular displacement ϕ between the light emitting arrangement 104 and the light detecting unit 106. The distance d and angular displacement ϕ between the light emitting arrangement 104 and the light detecting unit 106 is preferably pre-calibrated and not arbitrarily selected. The distance to each component 120 is calculated using triangulation. The known, previously calibrated distance d, ϕ from the light emitting arrangement 104 to the light detecting unit 106 forms the base of the triangle. The light detecting device 106 gives the angle to the detected component 120, whereby the angle of the light pattern component leaves the optical element 110 in a known and previously calibrated manner.

Furthermore, the light emitting arrangement 104 comprises a coordinate system 140. Hereby, the first portion 124 of the optical element 110 has a position relative to the origin of the coordinate system 140 of the light emitting arrangement 104. Likewise, the light detecting unit 106 comprises a coordinate system 150, wherein the first component 120 in the camera image 111 has a position relative to the origin of the coordinate system 150 of the light detecting unit 106. The mutual relationship between the light emitting arrangement 104 and the light detecting unit 106 may preferably be a mutual distance and direction between the origin of the coordinate system 140 of the light emitting arrangement 104 and the origin of the coordinate system 150 of the light detecting unit 106.

In the context of the above description, the control unit 108 thus receives the camera image 111 and determines the identity of the first component 120. The control unit 108 also determines the first portion 124 of the optical element 110 distributing the light beam generating the first component 120, as well as calculates/determines a distance from the first portion 124 to the first component 120 on the surface 116 of the vehicle wheel arrangement 102.

Moreover, the above described optical element 110 may, for example, be a diffractive optical element. Hereby, the portions 112 of the optical element 110 may be formed by a microstructure on the surface of the optical element. The optical element 110 may also be arranged in the form of a grating element comprising a plurality of portions in the form of apertures. Irrespective of the type of optical element 110 used, the optical element 110 should preferably be arranged such that a bright pixel portion thereof is surrounded by at least eight dark pixel portions. Hereby, the plurality portions in the distribution pattern of the optical element 110 as well as the projected light pattern 117 on the surface 116 of the vehicle wheel arrangement 102 will be well separated from each other.

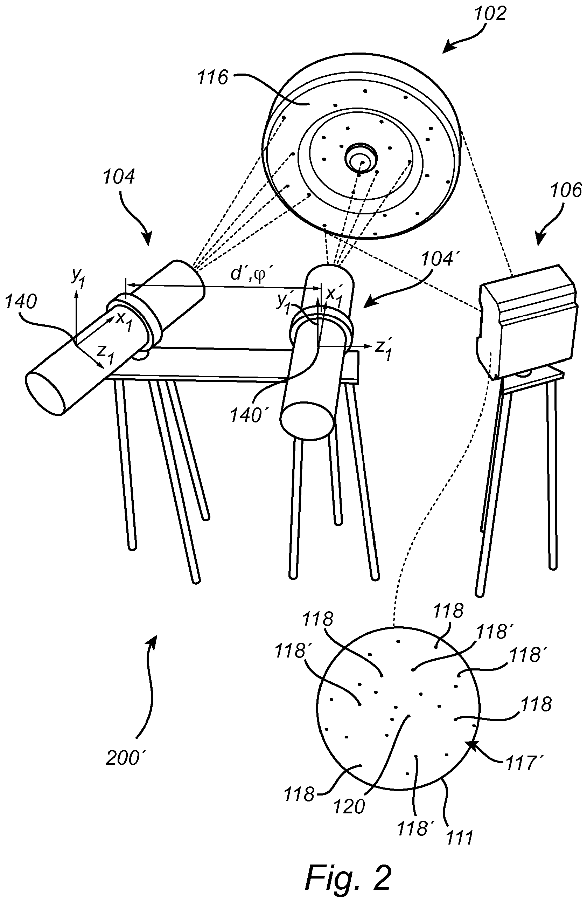

Reference is now made to Fig. 2 in order to describe another example embodiment of the present invention. In Fig. 2, the vehicle 100 and control unit 108 have been omitted for simplified understanding. The difference between the wheel alignment system 200' depicted in Fig. 2 and the embodiment described above in relation to Fig. 1 is that the wheel alignment system 200' in Fig. 2 comprises two separately arranged light emitting arrangements 104, 104'. Hereby, the light emitting arrangement in the form of two separately arranged light emitting arrangements 104, 104' project respective light patterns onto the surface 116 of the vehicle wheel arrangement 102. The wheel alignment system 200' in Fig. 2 also comprises a light detecting unit 106, preferably in the form of a camera.

Each of the first 104 and second 104' light emitting arrangements depicted in Fig. 2 comprises a light source and an optical element 110 as described above in relation to Fig. 1. The first 104 and second 104' light emitting arrangements are thus arranged to project a respective first and second light pattern onto the surface 116 of the vehicle wheel arrangement 102. The first and second light pattern may be provided from optical elements having a plurality of portions distributed in a similar distribution patterns, or a plurality of portions distributed in different distribution patterns in comparison to each other.

When the light patterns from the first 104 and second 104' light emitting arrangements are projected onto the surface 116 of the vehicle wheel arrangement 102, the light detecting unit 106 captures an image of the pattern 117'. In Fig. 2, components stemming from the optical element of the first light emitting arrangement 104 are denoted as 118, while components stemming from the optical element of the second light emitting arrangement 104' are denoted as 118'. In order for the light detecting unit 106 to distinguish the components 118 stemming from the optical element of the first light emitting arrangement 104 from components 118' stemming from the optical element of the second light emitting arrangement 104', the first 104 and second 104' optical arrangements may emit light of different wavelengths, or emit light sequentially, or emit light with different polarization.

The light detecting unit 106 captures images and determines a first component 120 of the light emitted from the first light emitting arrangement 104 as well as a second component of the light emitted from the second light emitting arrangement 104'. In a similar manner as described above, a first portion of the optical element in the first light emitting arrangement 104 generating the first component is determined, and a second portion of the optical element in the second light emitting arrangement 104' generating the second component is determined. Hereby, a first light beam generating the first component and a second light beam generating the second component are determined. By using triangulation calculation, the distance to the surface 116 of the vehicle wheel arrangement 102 can be determined.

According to an example, if an arbitrary component from the first light emitting arrangement 104 is position on the same position on the surface 116 of the vehicle wheel arrangement 102 as an arbitrary component from the second light emitting arrangement 104', the distance from the first 104 and/or second 104' light emitting arrangements to the position on the surface 116 of the vehicle wheel arrangement 102 can be determined using triangulation calculation as the direction of the light beams from the first and second light emitting arrangements is known and pre-calibrated. The distance d' and angular displacement ϕ' between the coordinate system 140 of the first light emitting arrangement 104 and the coordinate system 140' of the second light emitting arrangement 104' should hence be known and pre-calibrated.

By means of the arrangement depicted in Fig. 2, the light detecting arrangement can be arbitrary positioned relative the first 104 and second 104' light emitting arrangements.

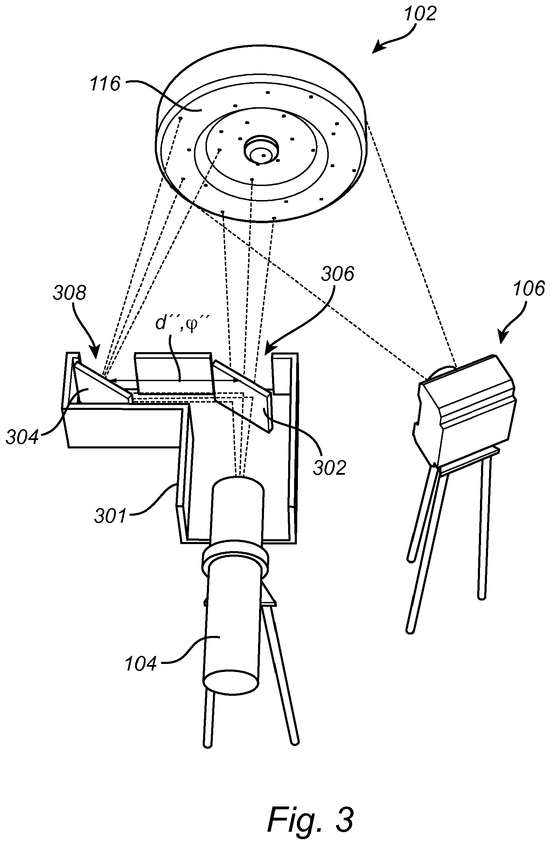

Reference is now made to Fig. 3 in order to describe yet another example embodiment of the present invention. The functionality of the embodiment depicted in Fig. 3 is similar to the functionality of the embodiment in Fig. 2. However, instead of two light emitting arrangements as depicted in Fig. 2, the embodiment in Fig. 3 utilizes a single light emitting arrangement 104 and a light reflecting arrangement 301 comprising two mirrors 302, 304. The light source of the light emitting arrangement 104 is thus arranged to emit a light beam through the optical element (not depicted in Fig. 3), which optical element 110 is configured in a similar manner as the above description. Hereby, a light pattern is projected onto the first mirror 302, where after a portion of the light is transmitted through the first mirror 302 and emitted through a first opening 306 of the light reflecting arrangement 301 towards the surface 116 of the vehicle wheel arrangement 102, while another portion of the light is reflected towards the second mirror 304 where it is guided towards the surface 116 of the vehicle wheel arrangement 102 via a second opening 308 of the light reflecting arrangement 301.

By means of the light reflecting arrangement 301 depicted in Fig. 3, the light emitting arrangement 104 projects light patterns onto the surface 116 of the vehicle wheel arrangement 102 from two positions spaced apart from each other. The distance d" and angular displacement ϕ" between the first 302 and second 304 mirrors should be known and pre-calibrated whereby distances to the surface 116 of the vehicle wheel arrangement 102 can be determined using triangulation calculation in a similar manner as described above in relation to the description of Fig. 2.

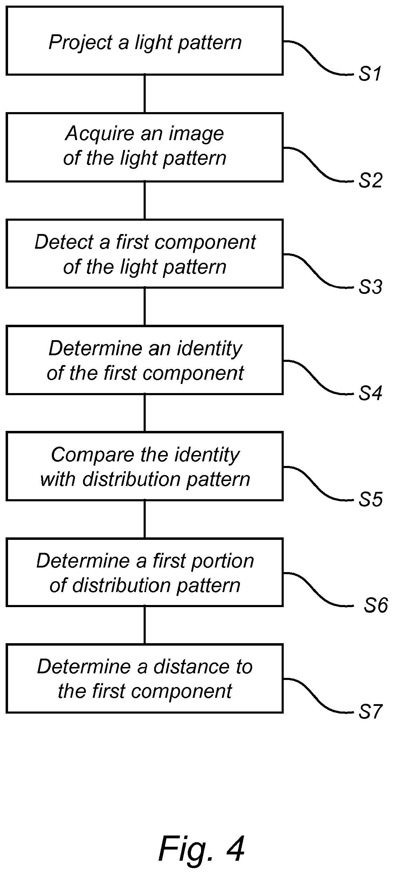

In order to sum up, reference is now made to Fig 4 in combination with Figs. 1 - 3 for describing an example embodiment for determining wheel alignment parameters of a vehicle wheel. Firstly, a light pattern is projected S1 onto the surface 116 of the vehicle wheel arrangement 102. As depicted in e.g. Fig. 1, the light pattern comprises a plurality of separately arranged components 118. These components 118 result from light beams emitted from the light emitting arrangement 104, 104'. As described above, the light emitting arrangement 104, 104' comprises the optical element 110. A light detecting unit 106 thereafter acquires S2 an image of the light pattern on the surface 116 of the vehicle wheel arrangement 102. A first component 120 of the light pattern is detected S3 from the acquired image. Based on a mutual relationship between the first component 120 and at least some of the surrounding components 118, an identity of the first component 120 can be determined S4. The identity is thus the footprint or fingerprint of the component which is preferably based on mutual angular displacement α₁, α₂ to its surrounding components 118. The identity of the first component 120 is compared S5 to the distribution pattern of the optical element 110 in order to determine S6 which one of the portions 112, referred to as the first portion, in the distribution pattern that generates the light beam corresponding to the first component 120. Once the first portion 122 is determined, the distance 130 between the first portion 112 of the optical element 110 and the first component 120 on the surface 116 of the vehicle wheel arrangement 102 can be determined S7.

Although the figures may show a sequence the order of the steps may differ from what is depicted. Also two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule based logic and other logic to accomplish the various connection steps, processing steps, comparison steps and decision steps. Additionally, even though the invention has been described with reference to specific exemplifying embodiments thereof, many different alterations, modifications and the like will become apparent for those skilled in the art.

It is to be understood that the present invention is not limited to the embodiment described above and illustrated in the drawings; rather, the skilled person will recognize that many changes and modifications may be made within the scope of the appended claims.

## Claims

1. A method for determining wheel alignment parameters of a vehicle wheel arrangement (102), the method comprising the steps of:
- projecting a pseudo-random light pattern (117) onto a surface (116) of the vehicle wheel arrangement (102), said pseudo-random light pattern (117) comprising a plurality of separately arranged components (118) resulting from a plurality of light beams emitted from a light emitting arrangement (104, 104'), said light emitting arrangement (104, 104') comprising a light source and an optical element (110) comprising a plurality of portions (112) arranged to form a distribution pattern (114) of the light from the light source, said distribution pattern (114) corresponding to the projected pseudo-random light pattern on the vehicle wheel arrangement;
- acquiring an image (111) of the pseudo-random light pattern (117) on the surface (116) of the vehicle wheel arrangement (102);
- detecting, from the acquired image (111), a first component (120) of the pseudo-random light pattern on the surface of the vehicle wheel arrangement;
- determining an identity of the first component (120) based on a mutual relationship between the first component (120) and the plurality of separately arranged components (118) by determining an angular displacement between the first component (120) and each of the plurality of separately arranged components (118); and determining the identity of the first component (120) based on a mutual angular displacement between the first component (120) and each of the plurality of separately arranged components (118);
- comparing the identity of the first component (120) with the distribution pattern (114) formed by the optical element (110);
- determining a first portion (124) of the distribution pattern (114) in the optical element (110) distributing the light beam generating the first component on the vehicle wheel arrangement (102); and
- determining a wheel alignment parameter of the vehicle wheel, the wheel alignment parameter being determined based on a distance between the first portion (124) of the distribution pattern (114) in the optical element (110) and the first component (120) on the surface (116) of the vehicle wheel arrangement (102).

2. The method according to claim 1, wherein the step of determining the first portion (124) of the distribution pattern (114) in the optical element (110) comprises the steps of:
- determining a mutual relationship between each of the plurality of portions (112) of the distribution patterns of the optical element (110);
- comparing the mutual relationship between each of the plurality of portions (112) of the distribution patterns and the identity of the first component (120) on the surface (116) of the vehicle wheel arrangement (102); and
- determining that the first portion (124) is the portion having a mutual relationship which corresponds to the identity of the first component (120).

3. The method according to any one of claims 1 or 2, wherein the image of the pseudo-random light pattern (117) on the surface (116) of the vehicle wheel arrangement (102) is acquired by means of a light detecting unit (106), wherein the step of determining the distance between the first portion and the first component further comprises the step of:
- determining a mutual relationship between the light detecting unit (106) and the light emitting arrangement (104, 104').

4. The method according to claim 3, wherein the step of determining the distance between the first portion (124) and the first component (120) further comprises the steps of:
- determining a position of the first portion (124) relative to a local coordinate system of the light emitting arrangement; and
- determining a position of the first component in the acquired image relative to a local coordinate system of the light detecting unit (106).

5. The method according to any one of claims 3 or 4, wherein the step of determining the mutual relationship between the light detecting unit (106) and the light emitting arrangement (104, 104') comprises the step of:
- determining a distance and relative rotation between the light detecting unit (106) and the light emitting arrangement (104, 104').

6. The method according to any one of the preceding claims, further comprising the step of:
- determining a direction of the light beam generating the first component (120) on the vehicle wheel arrangement (102).

7. The method according to any one of the preceding claims, wherein the projected pseudo-random light pattern represents a subset of separately arranged components from a full set of plurality of separately arranged components.

8. A wheel alignment system (200) for determining wheel alignment parameters of a vehicle wheel arrangement (102), the wheel alignment system comprising:
- a light emitting arrangement (104, 104') comprising a light source and an optical element (110) comprising a plurality of portions (112) forming a distribution pattern (114), said light emitting arrangement (104, 104') being configured to project a pseudo-random light pattern (117) comprising a plurality of separately arranged components (118) onto a surface (116) of the vehicle wheel arrangement (102), which pseudo-random light pattern (117) corresponds to the distribution pattern (114) of the optical element (110);
- a light detecting unit (106) configured to acquire an image of the pseudo-random light pattern (117) on the surface (116) of the vehicle wheel arrangement (102); wherein the wheel alignment system (200) further comprises a control unit (108) connected to the light emitting arrangement (104, 104') and the light detecting unit (106), said control unit being configured to:
- detect, from the image (111) acquired by the light detecting unit (106), a first component (120) of the pseudo-random light pattern (117) on the surface (116) of the vehicle wheel arrangement (102);
- determine an identity of the first component (120) based on a mutual relationship between the first component (120) and the plurality of separately arranged components (118) by determining an angular displacement between the first component (120) and each of the plurality of separately arranged components (118); and determine the identity of the first component (120) based on a mutual angular displacement between the first component (120) and each of the plurality of separately arranged components (118);
- compare the identity of the first component (120) with the distribution pattern (114) in the optical element (110);
- determine a first portion (124) of the optical element (110) distributing the light beam generating the first component (120) on the vehicle wheel arrangement (102); and to
- determine a wheel alignment parameter of the vehicle wheel, the wheel alignment parameter being determined based on a distance between the first portion (124) of the distribution pattern (114) in the optical element (110) and the first component (120) on the surface (116) of the vehicle wheel arrangement (102).

9. The wheel alignment system (200) according to claim 8, wherein the light emitting arrangement (104, 104') is arranged to project pseudo-random light patterns onto the surface of vehicle wheel arrangement (102) from two positions spaced apart from each other.

10. The wheel alignment system (200) according to any one of claims 8 or 9, wherein the optical element (110) is a first optical element, the light emitting arrangement (104, 104') further comprising a second optical element, wherein the first and second optical elements are spaced apart from each other.

11. The wheel alignment system (200) according to any one of claims 9 or 10, wherein the light source is a first light source, the light emitting arrangement (104, 104') further comprising a second light source, wherein the first and second light sources are spaced apart from each other.

12. The wheel alignment system (200) according to claim 11, wherein the first optical element is connected to the first light source for projecting a first pseudo-random light pattern onto the surface of the vehicle wheel arrangement (102), and wherein the second optical element is connected to the second light source for projecting a second pseudo-random light pattern onto the surface of the vehicle wheel arrangement (102).

13. The wheel alignment system (200) according to any one of claims 9 - 12, wherein the light detecting unit (106) is configured to acquire an image of the light pattern on the vehicle wheel arrangement (102) resulting from light projected from the two spaced apart positions.

14. The wheel alignment system (200) according to claim 9, wherein the light emitting arrangement (102) further comprises a light reflecting arrangement (301), said light reflecting arrangement being arranged to project the patterns onto the surface (116) of vehicle wheel arrangement from the two spaced apart position.

15. The wheel alignment system (200) according to any one of claims 8-14, wherein the optical element (110) is a diffractive optical element, wherein the plurality of portions forming the distribution pattern is formed by a structure on the surface of the diffractive optical element.

16. The wheel alignment system (200) according to any one of claims 8-14, wherein the optical element (110) is an optical grating element comprising a plurality of apertures forming the distribution pattern.

## Patentansprüche

1. Verfahren zum Bestimmen von Radausrichtungsparametern einer Fahrzeugradanordnung (102), wobei das Verfahren die folgenden Schritte umfasst:
- Projizieren eines pseudo-zufälligen Lichtmusters (117) auf eine Fläche (116) der Fahrzeugradanordnung (102), wobei das pseudo-zufällige Lichtmuster (117) mehrere getrennt angeordnete Komponenten (118) umfasst, die sich aus mehreren Lichtstrahlen ergeben, die von einer lichtemittierenden Anordnung (104, 104') emittiert werden, wobei die lichtemittierende Anordnung (104, 104') eine Lichtquelle und ein optisches Element (110) umfasst, das mehrere Abschnitte (112) umfasst, die so angeordnet sind, dass sie ein Verteilungsmuster (114) des Lichts von der Lichtquelle bilden, wobei das Verteilungsmuster (114) dem projizierten pseudo-zufälligen Lichtmuster auf der Fahrzeugradanordnung entspricht;
- Aufnehmen eines Bildes (111) des pseudo-zufälligen Lichtmusters (117) auf der Fläche (116) der Fahrzeugradanordnung (102);
- Erfassen einer ersten Komponente (120) des pseudo-zufälligen Lichtmusters auf der Fläche der Fahrzeugradanordnung aus dem erfassten Bild (111);
- Bestimmen einer Identität der ersten Komponente (120) basierend auf einer gegenseitigen Beziehung zwischen der ersten Komponente (120) und den mehreren getrennt angeordneten Komponenten (118) durch Bestimmen einer Winkelverschiebung zwischen der ersten Komponente (120) und jeder der mehreren getrennt angeordneten Komponenten (118); und Bestimmen der Identität der ersten Komponente (120) basierend auf einer gegenseitigen Winkelverschiebung zwischen der ersten Komponente (120) und jeder der mehreren getrennt angeordneten Komponenten (118);
- Vergleichen der Identität der ersten Komponente (120) mit dem Verteilungsmuster (114), das von dem optischen Element (110) gebildet wird;
- Bestimmen eines ersten Abschnitts (124) des Verteilungsmusters (114) in dem optischen Element (110), das den Lichtstrahl, der die erste Komponente erzeugt, auf die Fahrzeugradanordnung (102) verteilt; und
- Bestimmen eines Radausrichtungsparameters des Fahrzeugrads, wobei der Radausrichtungsparameter basierend auf einem Abstand zwischen dem ersten Abschnitt (124) des Verteilungsmusters (114) in dem optischen Element (110) und der ersten Komponente (120) auf der Fläche (116) der Fahrzeugradanordnung (102) bestimmt wird.

2. Verfahren nach Anspruch 1, wobei der Schritt des Bestimmens des ersten Abschnitts (124) des Verteilungsmusters (114) in dem optischen Element (110) die folgenden Schritte umfasst:
- Bestimmen einer gegenseitigen Beziehung zwischen jedem der mehreren Abschnitte (112) der Verteilungsmuster des optischen Elements (110);
- Vergleichen der gegenseitigen Beziehung zwischen jedem der mehreren Abschnitte (112) der Verteilungsmuster und der Identität der ersten Komponente (120) auf der Fläche (116) der Fahrzeugradanordnung (102); und
- Bestimmen, dass der erste Abschnitt (124) der Abschnitt ist, der eine gegenseitige Beziehung hat, die der Identität der ersten Komponente (120) entspricht.

3. Verfahren nach einem der Ansprüche 1 oder 2, wobei das Bild des pseudo-zufälligen Lichtmusters (117) auf der Fläche (116) der Fahrzeugradanordnung (102) mittels einer Lichterfassungseinheit (106) aufgenommen wird, wobei der Schritt des Bestimmens des Abstands zwischen dem ersten Abschnitt und der ersten Komponente ferner den folgenden Schritt umfasst:
- Bestimmen einer gegenseitigen Beziehung zwischen der Lichterfassungseinheit (106) und der lichtemittierenden Anordnung (104, 104').

4. Verfahren nach Anspruch 3, wobei der Schritt des Bestimmens des Abstands zwischen dem ersten Abschnitt (124) und der ersten Komponente (120) ferner die folgenden Schritte umfasst:
- Bestimmen einer Position des ersten Abschnitts (124) relativ zu einem lokalen Koordinatensystem der lichtemittierenden Anordnung; und
- Bestimmen einer Position der ersten Komponente in dem aufgenommenen Bild relativ zu einem lokalen Koordinatensystem der Lichterfassungseinheit (106) .

5. Verfahren nach einem der Ansprüche 3 oder 4, wobei der Schritt des Bestimmens der gegenseitigen Beziehung zwischen der Lichterfassungseinheit (106) und der lichtemittierenden Anordnung (104, 104') den folgenden Schritt umfasst:
- Bestimmen eines Abstands und einer relativen Drehung zwischen der Lichterfassungseinheit (106) und der lichtemittierenden Anordnung (104, 104').

6. Verfahren nach einem der der vorhergehenden Ansprüche, ferner umfassend den folgenden Schritt:
- Bestimmen einer Richtung des Lichtstrahls, der die erste Komponente (120) auf der Fahrzeugradanordnung (102) erzeugt.

7. Verfahren nach einem der vorhergehenden Ansprüche, wobei das projizierte pseudo-zufällige Lichtmuster eine Teilmenge von getrennt angeordneten Komponenten aus einer vollständigen Menge von mehreren getrennt angeordneten Komponenten darstellt.

8. Radausrichtungssystem (200) zum Bestimmen von Radausrichtungsparametern einer Fahrzeugradanordnung (102), wobei das Radausrichtungssystem umfasst:
- eine lichtemittierende Anordnung (104, 104'), die eine Lichtquelle und ein optisches Element (110) umfasst, das mehrere Abschnitte (112) umfasst, die ein Verteilungsmuster (114) bilden, wobei die lichtemittierende Anordnung (104, 104') eingerichtet ist, um ein pseudo-zufälliges Lichtmuster (117), das mehrere getrennt angeordnete Komponenten (118) umfasst, auf eine Fläche (116) der Fahrzeugradanordnung (102) zu projizieren, wobei das pseudo-zufällige Lichtmuster (117) dem Verteilungsmuster (114) des optischen Elements (110) entspricht;
- eine Lichterfassungseinheit (106), die eingerichtet ist, um ein Bild des pseudo-zufälligen Lichtmusters (117) auf der Fläche (116) der Fahrzeugradanordnung (102) aufzunehmen; wobei das Radausrichtungssystem (200) ferner eine Steuereinheit (108) umfasst, die mit der lichtemittierenden Anordnung (104, 104') und der Lichterfassungseinheit (106) verbunden ist, wobei die Steuereinheit eingerichtet ist zum:
- Erfassen einer ersten Komponente (120) des pseudo-zufälligen Lichtmusters (117) auf der Fläche (116) der Fahrzeugradanordnung (102) aus dem Bild (111), das von der Lichterfassungseinheit (106) aufgenommen wurde;
- Bestimmen einer Identität der ersten Komponente (120) basierend auf einer gegenseitigen Beziehung zwischen der ersten Komponente (120) und den mehreren getrennt angeordneten Komponenten (118) durch Bestimmen einer Winkelverschiebung zwischen der ersten Komponente (120) und jeder der mehreren getrennt angeordneten Komponenten (118); und Bestimmen der Identität der ersten Komponente (120) basierend auf einer gegenseitigen Winkelverschiebung zwischen der ersten Komponente (120) und jeder der mehreren getrennt angeordneten Komponenten (118);
- Vergleichen der Identität der ersten Komponente (120) mit dem Verteilungsmuster (114) in dem optischen Element (110);
- Bestimmen eines ersten Abschnitts (124) des optischen Elements (110), das den Lichtstrahl, der die erste Komponente (120) erzeugt, auf die Fahrzeugradanordnung (102) verteilt; und
- Bestimmen eines Radausrichtungsparameters des Fahrzeugrads, wobei der Radausrichtungsparameter basierend auf einem Abstand zwischen dem ersten Abschnitt (124) des Verteilungsmusters (114) in dem optischen Element (110) und der ersten Komponente (120) auf der Fläche (116) der Fahrzeugradanordnung (102) bestimmt wird.

9. Radausrichtungssystem (200) nach Anspruch 8, wobei die lichtemittierende Anordnung (104, 104') so angeordnet ist, dass sie pseudo-zufällige Lichtmuster aus zwei voneinander beabstandeten Positionen auf die Fläche der Fahrzeugradanordnung (102) projiziert.

10. Radausrichtungssystem (200) nach einem der Ansprüche 8 oder 9, wobei das optische Element (110) ein erstes optisches Element ist, wobei die lichtemittierende Anordnung (104, 104') ferner ein zweites optisches Element umfasst, wobei das erste und das zweite optische Element voneinander beabstandet sind.

11. Radausrichtungssystem (200) nach einem der Ansprüche 9 oder 10, wobei die Lichtquelle eine erste Lichtquelle ist, wobei die lichtemittierende Anordnung (104, 104') ferner eine zweite Lichtquelle umfasst, wobei die erste und die zweite Lichtquelle voneinander beabstandet sind.

12. Radausrichtungssystem (200) nach Anspruch 11, wobei das erste optische Element mit der ersten Lichtquelle verbunden ist, um ein erstes pseudo-zufälliges Lichtmuster auf die Fläche der Fahrzeugradanordnung (102) zu projizieren, und wobei das zweite optische Element mit der zweiten Lichtquelle verbunden ist, um ein zweites pseudo-zufälliges Lichtmuster auf die Fläche der Fahrzeugradanordnung (102) zu projizieren.

13. Radausrichtungssystem (200) nach einem der Ansprüche 9-12, wobei die Lichterfassungseinheit (106) eingerichtet ist, um ein Bild des Lichtmusters auf der Fahrzeugradanordnung (102) aufzunehmen, das sich aus dem Licht ergibt, das von den beiden voneinander beabstandeten Positionen projiziert wird.

14. Radausrichtungssystem (200) nach Anspruch 9, wobei die lichtemittierende Anordnung (102) ferner eine lichtreflektierende Anordnung (301) umfasst, wobei die lichtreflektierende Anordnung so angeordnet ist, dass sie die Muster von den beiden beabstandeten Positionen aus auf die Fläche (116) der Fahrzeugradanordnung projiziert.

15. Radausrichtungssystem (200) nach einem der Ansprüche 8 - 14, wobei das optische Element (110) ein beugendes optisches Element ist, wobei die mehreren Abschnitte, die das Verteilungsmuster bilden, durch eine Struktur auf der Fläche des beugenden optischen Elements gebildet sind.

16. Radausrichtungssystem (200) nach einem der Ansprüche 8 - 14, wobei das optische Element (110) ein optisches Gitterelement ist, das mehrere Aperturen umfasst, die das Verteilungsmuster bilden.

## Revendications

1. Procédé de détermination de paramètres d'alignement de roue d'un dispositif de roue de véhicule (102), ce procédé comprenant les étapes suivantes :
- projection d'un motif lumineux pseudo-aléatoire (117) sur une surface (116) du dispositif de roue de véhicule (102), ledit motif lumineux pseudo-aléatoire (117) comprenant une pluralité de composants disposés séparément (118) résultant d'une pluralité de faisceaux lumineux émis par un dispositif d'émission de lumière (104,104'), ledit dispositif d'émission de lumière (104,104') comprenant une source lumineuse et un élément optique (110) comprenant une pluralité de sections (112) disposées de manière à former un motif de répartition (114) de la lumière de la source lumineuse, ledit motif de répartition (114) correspondant au motif lumineux pseudo-aléatoire projeté sur le dispositif de roue de véhicule ;
- acquisition d'une image (111) du motif lumineux pseudo-aléatoire (117) sur la surface (116) du dispositif de roue de véhicule (102) ;
- détection, dans l'image acquise (111), d'un premier composant (120) du motif lumineux pseudo-aléatoire sur la surface du dispositif de roue de véhicule ;
- détermination d'une identité du premier composant (120) en se basant sur une relation mutuelle entre le premier composant (120) et la pluralité de composants disposés séparément (118) en déterminant un déplacement angulaire entre le premier composant (120) et chacun de la pluralité de composants disposés séparément (118) ; et détermination de l'identité du premier composant (120) en se basant sur un déplacement angulaire mutuel entre le premier composant (120) et chacun de la pluralité de composants disposés séparément (118) ;
- comparaison de l'identité du premier composant (120) avec le motif de répartition (114) formé par l'élément optique (110) ;
- détermination d'une première section (124) du motif de répartition (114) dans l'élément optique (110) répartissant le faisceau lumineux générant le premier composant sur le dispositif de roue de véhicule (102) ; et
- détermination d'un paramètre d'alignement de roue de la roue de véhicule, le paramètre d'alignement de roue étant déterminé en se basant sur une distance entre la première section (124) du motif de répartition (114) dans l'élément optique (110) et le premier composant (120) sur la surface (116) du dispositif de roue de véhicule (102).

2. Procédé selon la revendication 1, dans lequel l'étape de détermination de la première section (124) du motif de répartition (114) dans l'élément optique (110) comprend les étapes suivantes :
- détermination d'une relation mutuelle entre chacune de la pluralité de sections (112) des motifs de répartition de l'élément optique (110) ;
- comparaison de la relation mutuelle entre chacune de la pluralité de sections (112) des motifs de répartition et l'identité du premier composant (120) sur la surface (116) du dispositif de roue de véhicule (102) ; et
- détermination que la première section (124) est la section ayant une relation mutuelle qui correspond à l'identité du premier composant (120) .

3. Procédé selon l'une quelconque des revendications 1 ou 2, dans lequel l'image du motif lumineux pseudo-aléatoire (117) sur la surface (116) du dispositif de roue de véhicule (102) est acquise au moyen d'une unité de détection de lumière (106), l'étape de détermination de la distance entre la première section et le premier composant comprenant en outre l'étape de :
- détermination d'une relation mutuelle entre l'unité de détection de lumière (106) et le dispositif d'émission de lumière (104,104').

4. Procédé selon la revendication 3, dans lequel l'étape de détermination de la distance entre la première section (124) et le premier composant (120) comprend en outre les étapes suivantes :
- détermination d'une position de la première section (124) par rapport à un système de coordonnées local du dispositif d'émission de lumière ; et
- détermination d'une position du premier composant dans l'image acquise par rapport à un système de coordonnées local de l'unité de détection de lumière (106).

5. Procédé selon l'une quelconque des revendications 3 ou 4, dans lequel l'étape de détermination de la relation mutuelle entre l'unité de détection de lumière (106) et le dispositif d'émission de lumière (104,104') comprend l'étape de :
- détermination d'une distance et d'une rotation relative entre l'unité de détection de lumière (106) et le dispositif d'émission de lumière (104, 104' ) .

6. Procédé selon l'une quelconque des revendications précédentes, comprenant en outre l'étape de :
- détermination d'une direction du faisceau lumineux générant le premier composant (120) sur le dispositif de roue de véhicule (102).

7. Procédé selon l'une quelconque des revendications précédentes, dans lequel le motif lumineux pseudo-aléatoire représente un sous-ensemble de composants disposés séparément parmi un ensemble complet de composants disposés séparément.

8. Système d'alignement de roue (200) pour la détermination de paramètres d'alignement de roue d'un dispositif de roue de véhicule (102), le système d'alignement de roue comprenant :
- un dispositif d'émission de lumière (104,104') comprenant une source lumineuse et un élément optique (110) comprenant une pluralité de sections (112) formant un motif de répartition (114), ledit dispositif d'émission de lumière (104,104') étant configuré pour projeter un motif lumineux pseudo-aléatoire (117) comprenant une pluralité de composants disposés séparément (118) sur une surface (116) du dispositif de roue de véhicule (102), lequel motif lumineux pseudo-aléatoire (117) correspondant au motif de répartition (114) de l'élément optique (110) ;
- une unité de détection de lumière (106) configurée pour acquérir une image du motif lumineux pseudo-aléatoire (117) sur la surface (116) du dispositif de roue de véhicule (102) ;
le système d'alignement de roue (200) comprenant en outre une unité de commande (108) connectée au dispositif d'émission de lumière (104,104') et à l'unité de détection de lumière (106), ladite unité de commande étant configurée pour :
- détecter, dans l'image (111) acquise par l'unité de détection de lumière (106), un premier composant (120) du motif lumineux pseudo-aléatoire (117) sur la surface (116) du dispositif de roue de véhicule (102) ;
- déterminer une identité du premier composant (120) en se basant sur une relation mutuelle entre le premier composant (120) et la pluralité de composants disposés séparément (118) en déterminant un déplacement angulaire entre le premier composant (120) et chacun de la pluralité de composants disposés séparément (118) ; et déterminer l'identité du premier composant (120) en se basant sur un déplacement angulaire mutuel entre le premier composant (120) et chacun de la pluralité de composants disposés séparément (118) ;
- comparer l'identité du premier composant (120) avec le motif de répartition (114) dans l'élément optique (110) ;
- déterminer une première section (124) de l'élément optique (110) répartissant le faisceau lumineux générant le premier composant (120) sur le dispositif de roue de véhicule (102) ; et
- déterminer un paramètre d'alignement de la roue de la roue de véhicule, le paramètre d'alignement de roue étant déterminé en se basant sur une distance entre la première section (124) du motif de répartition (114) dans l'élément optique (110) et le premier composant (120) sur la surface (116) du dispositif de roue de véhicule (102).

9. Système d'alignement de roue (200) selon la revendication 8, dans lequel le dispositif d'émission de lumière (104,104') est conçu pour projeter des motifs lumineux pseudo-aléatoires sur la surface du dispositif de roue de véhicule (102) depuis deux positions espacées l'une de l'autre.

10. Système d'alignement de roue (200) selon l'une quelconque des revendications 8 ou 9, dans lequel l'élément optique (110) est un premier élément optique, le dispositif d'émission de lumière (104,104') comprenant en outre un second élément optique, les premier et second éléments optiques étant espacés l'un de l'autre.

11. Système d'alignement de roue (200) selon l'une quelconque des revendications 9 ou 10, dans lequel la source lumineuse est une première source lumineuse, le dispositif d'émission de lumière (104,104') comprenant une seconde source lumineuse, les première et seconde sources lumineuses étant espacées l'une de l'autre.

12. Système d'alignement de roue (200) selon la revendication 11, dans lequel le premier élément est connecté à la première source lumineuse pour projeter un premier motif lumineux pseudo-aléatoire sur la surface du dispositif de roue de véhicule (102), et le second élément optique est connecté à la seconde source lumineuse pour projeter un second motif lumineux pseudo-aléatoire sur la surface du dispositif de roue de véhicule (102).

13. Système d'alignement de roue (200) selon l'une quelconque des revendications 9 à 12, dans lequel l'unité de détection de lumière (106) est configurée pour acquérir une image du motif lumineux sur le dispositif de roue de véhicule (102) résultant de lumière projetée depuis les deux positions espacées.

14. Système d'alignement de roue (200) selon la revendication 9, dans lequel le dispositif d'émission de lumière (102) comprend en outre un premier dispositif de réflexion de lumière (301), ledit dispositif de réflexion de lumière étant conçu pour projeter les motifs sur la surface (116) du dispositif de roue de véhicule depuis les deux positions espacées.

15. Système d'alignement de roue (200) selon l'une quelconque des revendications 8 à 14, dans lequel l'élément optique (110) est un élément optique diffractif, la pluralité de sections formant le motif de répartition étant formées par une structure sur la surface de l'élément optique diffractif.

16. Système d'alignement de roue (200) selon l'une quelconque des revendications 8 à 14, dans lequel l'élément optique (110) est un élément à grille optique comprenant une pluralité d'ouvertures formant le motif de répartition.
